# EUROPÄISCHE PATENTANMELDUNG

(11) **EP 0 712 176 A1**
(43) Veröffentlichungstag der Anmeldung: **15.05.1996**
(21) Anmeldenummer: 95119977.7
(22) Anmeldetag: 03.12.1993
(51) Int. Cl.: H01M 8/24, H01M 8/02, H01M 8/12, C25B 1/04

(54) **Keramische Gasanschlussbauteile für Brennstoffzellen mit Zirkonoxid-Festelektrolyt**

(30) Priorität: 17.12.1992 DE 4242728
(62) Teilanmeldung aus: 93119484.9
(71) Anmelder: DORNIER GmbH, D-88039 Friedrichshafen (DE)
(72) Erfinder: Späh, Richard, Dr.-Phys., D-88662 Überlingen (DE); Schäfer, Wolfgang, Dr.-Phys., D-88048 Friedrichshafen (DE); Stolten, Detlef, Dr.-Ing., D-88690 Überlingen (DE); Fandel, Marco, Dipl.-Ing., D-88090 Immenstaad (DE)

(57) **Zusammenfassung**

Elektrisch isolierende Gasanschlußbauteile für Brennstoffzellen mit keramischem Elektrolyt, wobei die Gasanschlußbauteile eine Zusammensetzung aus dem Stoffsystem MgO-SiO₂ aufweisen.

## Beschreibung

Zirkonoxid-Festelektrolyt-Brennstoffzellen sind elektrochemische Energiewandler, die Strom direkt aus gasförmigen Energieträgern /z.B. H₂, CO, CH₄) erzeugen. Sie basieren auf Zirkonoxid als Sauerstoff-Ionen-leitendem Festelektrolyt und werden bei Temperaturen von ca. 800 bis 1000°C betrieben. Da sie nicht wie Wärmekraftmaschinen der Carnot-Regel unterliegen, erreichen sie deutlich höhere Wirkungsgrade von über 50 %. Deshalb und wegen ihrer geringen Emission von Schadstoffen haben sie ein hohes Potential als zukünftige Energiewandler, speziell wenn sie Erdgas als Primärenergieträger verwenden.

Im Hinblick auf Wirtschaftlichkeit und hohe Energiedichte ist ein planares Zelldesign vorteilhaft. Bei dieser Anordnung sind dünne Festelektrolytplatten beidseitig mit porösen Elektroden beschichtet und diese abwechselnd mit Verbindungselementen übereinander gestapelt, so daß eine bipolare Anordnung entsteht. Mehrere Einzelzellen können seriengeschaltet werden. Diese Zellverbunde (= Zellstacks) werden zu größeren Einheiten mit Hilfe von elektrischen Leitersystemen und Gasleitungen verschaltet.

Die für Brennstoffzellen beschriebenen Anordnungen können auch für den Umkehrprozeß der Hochtemperatur-Elektrolyse verwendet werden, um aus Wasser bei ca. 800 bis 1000°C mit hohem Wirkungsgrad Wasserstoff herzustellen.

Stand der Technik sind bei den (heute bevorzugten) Kreuzstrom-Gasführungen Gasanschlußbauteile aus Zirkonoxid oder Aluminiumoxid. Bei anderen z.B. internen Gasführungen werden zum Teil auch metallische Teile verwendet, die jedoch gegen die Zellen elektrisch isoliert werden müssen. Alle diese Lösungen haben jedoch prinzipielle Nachteile: Im Fall des Zirkonoxid führt dessen Sauerstoffionenleitfähigkeit dazu, daß ein elektrischer Nebenschluß zu den Zellen existiert, der den Wirkungsgrad erniedrigt und sogar zu elektrochemisch bedingten Werkstoffzerstörungen führen kann. Bei der Verwendung von Aluminiumoxid sind aufwendige Konstruktionen zum Ausgleich der nicht angepaßten thermischen Ausdehnung zwischen dem Zellstapel und den Gasanschlußteilen erforderlich, die oft nur zu Lasten der Gasdichtigkeit möglich sind. Im letztgenannten Fall der metallischen Teile sind aufwendige Geometrien zur elektrischen Isolierung der Zellen erforderlich, die hohe Kosten verursachen und die Fertigungs- und Betriebssicherheit verringern.

Als Werkstoffe für Festelektrolyt-Brennstoffzellen werden vorzugsweise verwendet:
- **Elektrolyt:**: ZrO₂ mit CaO-, MgO-, Y₂O₃- oder anderer Seltenerdoxid-Dotierung sowie teilweise auch mit Al₂O₃-Zusatz
- **Brenngaselektrode:**: Metallkeramikverbundwerkstoffe mit Nickel oder Kobalt als metallischer und dotiertem CeO₂ oder ZrO₂ als keramischer Komponente
- **Luftelektrode:**: Dotierte Oxide mit Perowskitstruktur wie z.B. La₁₋ₓ CaₓMnO₃, La₁₋ₓSrₓMnO₃, La₁₋ₓSrₓ Co_{y}Mn_{1-y}O₃
- **Verbindungselement:**: Dotiertes Lanthanchromit wie z.B. La₁₋ₓSrₓ Co_{y}LaMgₓCr₁₋ₓO₃
Die oben angegebenen Komponenten sind im Zellverbund zu gasdichten Einheiten zusammengefügt.

Um die hohen Anforderungen an die Gasdichtigkeit bei hoher Temperatur und beim Aufheizen sowie Abkühlen zu gewährleisten, sind die thermischen Ausdehnungskoeffizienten sämtlicher Komponenten sehr gut aufeinander abgestimmt.

Den Zellverbunden werden unter definierten Strömungsbedingungen Luft sowie Brenngas zugeführt und die Abgase oder die abgereicherte Luft abgeführt. Hierzu werden gasdichte Gasanschlußbauteile benötigt, an die folgende Aufgaben gestellten werden:
- Die thermische Ausdehnung soll mit den anderen Brennstoffzellenkomponenten, insbesondere dem ZrO₂-Elektrolyt übereinstimmen.
- Hochtemperaturbeständigkeit in Anwesenheit von Luft einerseits sowie Brenngasen wie H₂, CH₄ oder CO andererseits.
- Sie sollen bei Betriebstemperatur elektrisch isolieren, so daß sie keinen Nebenschluß zum Zellverbund darstellen.
- Sie sollen sich zu günstigen Kosten herstellen lassen und mit dem Zellverbund gasdicht verbindbar sein.

Es ist kein Einstoffsystem bekannt, das alle vier Teilaufgaben erfüllt. Es wird deshalb erfindungsgemäß ein Gemisch aus zwei oder mehr keramischen Stoffen verwendet, bei dem einer der Stoffe einen höheren thermischen Ausdehnungskoeffizient als gefordert und der andere einen geringeren als gefordert besitzen. Durch Wahl des Volumenverhältnisses oder daraus abgeleitet des Molverhältnisses kann der thermische Ausdehnungskoeffizient eingestellt werden. Sofern die Stoffe keine Reaktion miteinander eingehen, kann der resultierende Ausdehnungskoeffizient durch das mit den beiden Volumenverhältnissen gewichtete Mittel der Einzelwerte berechnet werden.

Beim Gegenstand der Erfindung wird das Zweistoffsystem MgO-Al₂O₃ in dem Bereich MgO/Al₂O₃ von 1:1 bis 7:1 verwendet. Da das Grenzverhältnis 1:1 der Zusammensetzung MgO · Al₂O₃ (oder in anderer Schreibweise MgAl₂O₄) dem Magnesiumspinell entspricht, handelt es sich um einen hinsichtlich MgO überstöchiometrischen Spinell.
Beim MgO/Al₂O₃-Verhältnis 1:1 liegt der thermische Ausdehnungskoeffizient unterhalb von ZrO₂. Da sich bei der Steigerung des MgO-Gehalts der thermische Ausdehnungskoeffizient monoton erhöht, kann über gezielte MgO-Zugabe der Ausdehnungskoeffizient von ZrO₂ exakt eingestellt werden.

Da sowohl MgO · Al₂O₃ (Spinell) als auch MgO hochtemperaturbeständig, elektrisch isolierend, und gegen Reduktion durch die Brenngase beständig sind, trifft dies auch auf die hier beschriebene Mischkeramik zu. Hinsichtlich der Herstell- und Fügetechniken lassen sich ebenfalls die für MgO · Al₂O₃ oder MgO erprobten Verfahren übertragen.

Als Rohstoffe zur Herstellung der Gasanschlußbauteile können MgO- und MgO · Al₂O₃-Pulver verwendet werden, die kommerziell und kostengünstig erhältlich sind. Somit sind alle oben beschriebenen Teilaufgaben gelöst.

Das erfindungsgemäße Prinzip, über das Mischungsverhältnis von zwei Stoffen den thermischen Ausdehnungskoeffizienten einzustellen, läßt sich auch auf andere Systeme wie z.B. MgO-SiO₂ übertragen.

Die Erfindung wird nachfolgend anhand von Fig. und eines Ausführungsbeispiels beschrieben.

Es zeigen:

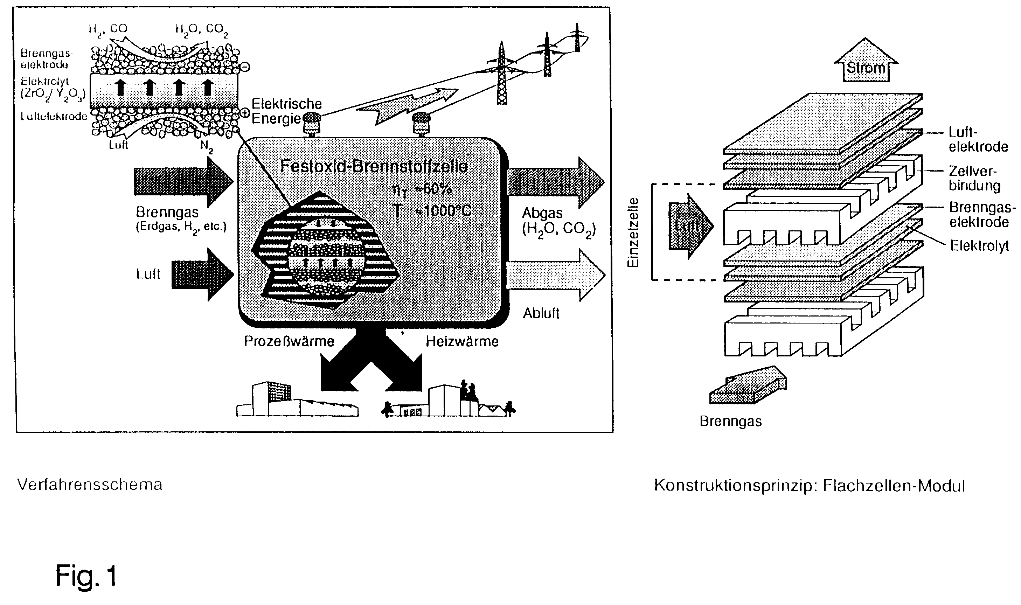

- Fig. 1: seriengeschaltete Einzelzellen einer Brennstoffzelle,

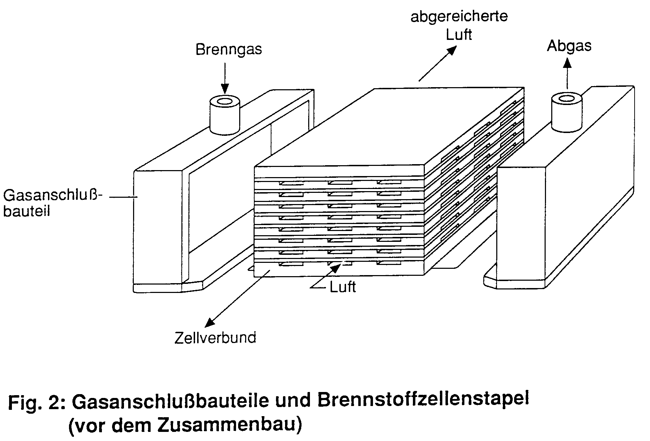

- Fig. 2: ein Ausführungsbeispiel für die Geometrie von Gasanschlußbauteilen,
- Fig. 3: ein Diagramm mit dem Arbeitsbereich in einem erfindungsgemäßen Zweistoffsystem, und
- Fig. 4: ein Diagramm des thermischen Ausdehnungskoeffizienten als Funktion des MgO/Al₂O₃ Molverhältnisses.

Die erfindungsgemäßen Gasanschlußbauteile wurden nach folgendem Verfahren hergestellt:
- Mischen von Pulvern aus MgO und MgO · Al₂O₃
- Isostatisches Pressen bei 2000 bar oder Axialpressen bei 1000 bar
- Sintern an Luft bei 1650°C
- Mechanische Nachbearbeitung

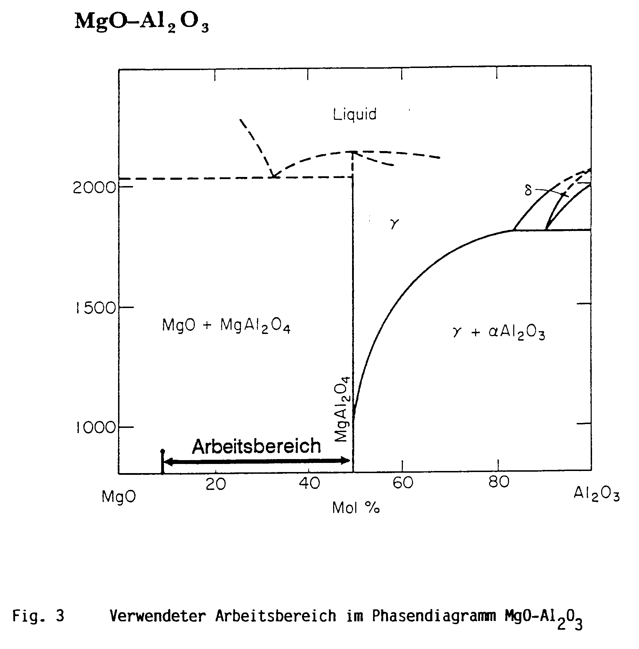

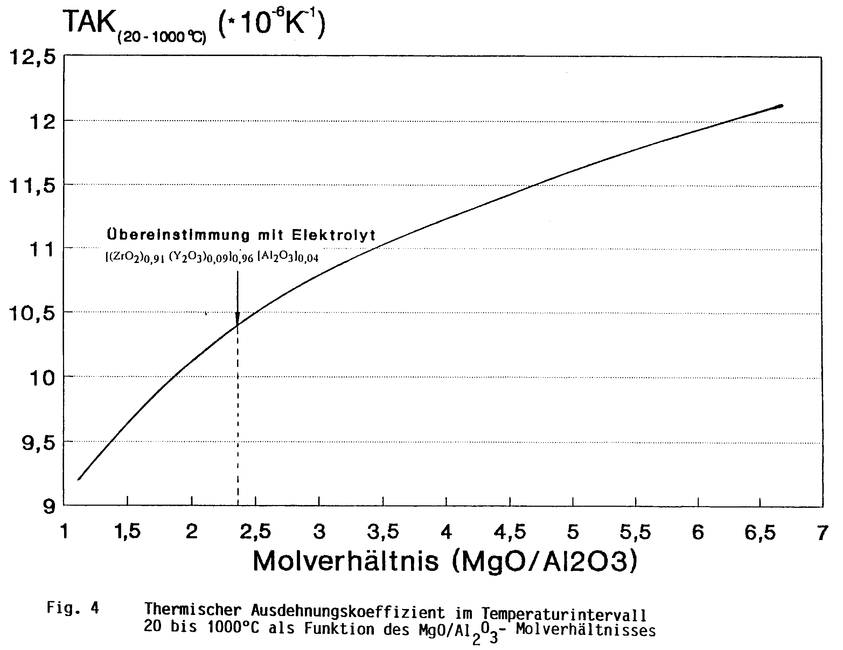

Die Charakterisierung der Proben und Teile umfaßte die Messung des thermischen Ausdehnungskoeffizienten, des elektrischen Widerstands, Fügeversuche mit Brennstoffzellen sowie Betriebsversuche im Brennstoffzellenbetrieb. Der thermische Ausdehnungskoeffizient wurde für MgO/Al₂O₃ im Bereich zwischen 1:1 bis 7:1 (Fig. 3) untersucht. Die Abhängigkeit ist in Fig. 4 dargestellt. Ein identischer Ausdehnungskoeffizient zum Elektrolytmaterial [(ZrO₂)_{0,91}(Y₂O₃)_{0,09}]_{0,96}[Al₂O₃]_{0,04} ergibt sich für MgO/Al₂O₃ = 2,35

Als spezifischer elektrischer Widerstand wurde 1,5 · 10⁶ Ω cm bei 1000°C gemessen. Gasdichte Verbindungen mit Brennstoffzellen wurden durch Fügen oder Lote auf SiO₂-Basis bei Temperaturen von rund 1200°C hergestellt. Betriebsversuche mit kompletten Brennstoffzellen verliefen erfolgreich.

## Patentansprüche

1. Elektrisch isolierendes Gasanschlußbauteil für Brennstoffzellen mit keramischem Elektrolyt, **dadurch gekennzeichnet**, daß es eine Zusammensetzung aus dem Stoffsystem MgO-SiO₂ aufweist, wobei hieraus der Stoff Mg₂SiO₄ (Forsterit) gewählt wird, der mit ca. 10,3 · 10⁻⁶k⁻¹ einen gut zu ZrO₂ passenden thermischen Ausdehnungskoeffizienten besitzt.

2. Gasanschlußbauteil nach Anspruch 1, **dadurch gekennzeichnet**, daß eine Mg₂SiO₄-Forsterit-Keramik mit überstöchiometrischen MgO-Zusatz verwendet wird, wodurch der thermische Ausdehnungskoeffizient einstellbar erhöht wird.

3. Gasanschlußbauteil nach Anspruch 1, **dadurch gekennzeichnet**, daß eine Mg₂SiO₄-Forsterit-Keramik mit stöchiometrischem SiO₂-Enstatit-Zusatz verwendet wird, wodurch der thermische Ausdehungskoeffizient einstellbar verringert wird.

4. Gasanschlußbauteil nach einem der Ansprüche 1 bis 3, **dadurch gekennzeichnet**, daß das Bauteil in Kombination mit einem Festelektrolyt der Zusammensetzung
[(ZrO₂)₁₋ₓ(Y₂O₃)ₓ]_{1-y}(Al₂O₃)_{y} mit 0,03 ≦ x ≦ 0,2 und O ≦ y ≦ 0,25 verwendet wird, wobei über den Parameter y dessen thermischer Ausdehnungskoeffizient variiert werden kann.

5. Gasanschlußbauteile nach einem der Ansprüche 1 bis 4, **dadurch gekennzeichnet**, daß das Bauteil mittels eines Lotes aus Glas, Keramik, Glaskeramik oder Metall gasdicht mit dem Brennstofzellen-Stapel verbunden wird.

6. Gasanschlußbauteile nach einem der Ansprüche 1 bis 5, **dadurch gekennzeichnet**, daß das Bauteil neben MgO und SiO₂ noch eines oder mehrere der folgenden Oxide FeO, Fe₂O₃, ZrO₂, SiO₂, CaO, SrO, Na₂O, K₂O, TiO₂, Cr₂O₃ in einer Konzentration bis 3 mol% enthält.

7. Gasanschlußbauteile nach einem der Ansprüche 1 bis 6, **dadurch gekennzeichnet**, daß das Bauteil für Elektrolysezellen mit keramischem Festelektrolyt statt für Brennstoffzellen verwendet wird.
